# EUROPEAN PATENT SPECIFICATION

(11) **EP 2 508 941 B1**
(45) Date of publication and mention of the grant of the patent: **06.11.2019**
(21) Application number: 12162171.8
(22) Date of filing: 29.03.2012
(51) Int. Cl.: G02F 1/1335, G02F 1/1362

(54) **Transflective array substrate and transflective liquid-crystal display**
Transflektiver Arrayträger und transflektive Flüssigkristallanzeige
Substrat de réseau transflectif et affichage à cristaux liquides transflectif

(30) Priority: 08.04.2011 CN 201120102254 U
(43) Date of publication of application: 10.10.2012
(73) Proprietor: BOE Technology Group Co., Ltd., Beijing 100015 (CN)
(72) Inventor: Sun, Yang, Beijing 100176 (CN); Peng, Kuanjun, Beijing 100176 (CN); Zhang, Yuting, Beijing 100176 (CN)
(74) Representative: Klunker IP Patentanwälte PartG mbB

(56) References cited:
- US-A1- 2005 264 730
- US-A1- 2006 050 208
- US-A1- 2008 043 185
- US-A1- 2009 237 600

## Description

### BACKGROUND

The present invention relates to a transflective array substrate and a transflective liquid crystal display (LCD).

A transflective thin film transistor liquid crystal display (TFT-LCD) adopts transmissive and reflective pixel structures, and possesses a backlight source and a reflection layer. Hence, this kind of TFT-LCD can not only employ the backlight source but also take advantage of an external light source (for example, sunshine) for display, and provide good view quality for a user in a strong light environment or a light-free environment.

According to different structures, the transflective liquid crystal displays can be divided into two categories: a double-cell-gap type and a single-cell-gap type. A double-cell-gap transflective TFT-LCD has different thicknesses of liquid crystal layer in a transmissive portion (transmission region) and a reflection portion (reflection region), and the thickness of the liquid crystal layer in the transmission region is twice of that in the reflection region commonly. In a single-cell-gap transflective liquid crystal display, the transmission region and the reflection region in the pixel unit have the same thickness of liquid crystal layer.

US 2005/264730 A1 disclosed a transflective liquid crystal display, which has a pair of substrates provided opposite to each other, a liquid crystal sealed between the pair of substrates, a plurality of pixel regions each having a reflective area which reflects light from the side of one of the substrates and a transmissive area which transmits light from the side of the other of the substrates toward the one of the substrates. In an embodiment, a reflective area R is formed in the middle portion, and transmissive areas T are formed on both sides of the same; a reflective electrode is provided in the reflective area R, and a transparent electrode is formed substantially throughout the transmissive areas T. The reflective electrode is provided such that it overlaps a gate bus line, a drain bus line or TFT, and both the gate bus line and the drain bus line extend in the middle portion of each pixel region respectively in two directions perpendicular to each other.

US 2009/237600 A1 disclosed an LCD unit including a reflective area and a transmissive area in each pixel, which are driven by respective drive electrode assemblies. A first substrate and a second substrate that sandwich therebetween a LC layer include respective shied films in the boundary area between the reflective area and the transmissive area.

As for the double-cell-gap transflective liquid crystal display, the transmission region and the reflection region have different thicknesses of liquid crystal layer, thus the alignments of the liquid crystal molecules become irregular at the boundary between the two regions, and thus the display at the boundary become abnormal (for example, the display panel has light leakage) to make the characteristics such as contrast ratio, etc. degraded.

### SUMMARY

It is an object of the present invention to provide a transflective array substrate and transflective liquid crystal display for improving display quality.

The object is achieved by the features of independent claim 1 and dependent claim 3. Further embodiments are defined in the respective dependent claims.

In the transflective pixel structure and the transflective liquid crystal display provided in the embodiments of the disclosed technology, the gate line passes through the pixel structure and divides one pixel unit into two regions, the upper half portion is a transmission region, and the lower half portion is a reflection region. The gate line shields the light from the base substrate to the boundary of the liquid crystal layer to reduce or eliminate abnormal light at the boundary, and thus the display quality is improved. Meanwhile, the embodiment of the disclosed technology modify the position of the gate line upwardly, without incorporating a new shielding layer, then this modification has substantially no influence on the pixel aperture ratio.

Further scope of applicability of the disclosed technology will become apparent from the detailed description given hereinafter. However, it should be understood that the detailed description and specific examples, while indicating preferred embodiments of the disclosed technology, are given by way of illustration only, since various changes and modifications within the scope of the disclosed technology will become apparent to those skilled in the art from the following detailed description.

### BRIEF DESCRIPTION OF THE DRAWINGS

The disclosed technology will become more fully understood from the detailed description given hereinafter and the accompanying drawings which are given by way of illustration only, and thus are not limitative of the disclosed technology and wherein:
Figure 1 shows a structural schematic drawing of a double-cell-gap transflective liquid crystal display; and
Figure 2 shows a structural schematic drawing of transflective pixel of a comparative embodiment of this disclosed technology.

### DETAILED DESCRIPTION

Embodiment of the disclosed technology are made to overcome the defect of abnormal display generated at the boundary between two cell gaps in a conventional double-cell-gap transflective liquid crystal display, and achieves improvement of the display quality without reducing pixel aperture ratio.

Further detailed description is made to the embodiments of this disclosed technology with reference to the drawings.

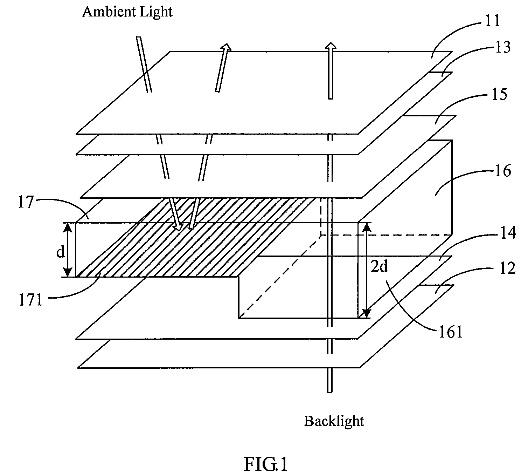

Firstly, Fig. 1 is a typical structural schematic drawing of a double-cell-gap transflective liquid crystal display. The liquid crystal layer 16, 17 is interposed between the color filter substrate 15 and the thin film transistor (TFT) array substrate 14. In each pixel unit defined by a gate line and a data line that are crossed with each other, the liquid crystal layer has a reflection region 17 in which a reflective electrode 171 for reflecting light is provided, and a transmission region 16 in which a transmissive electrode 161 for allowing light transmit is provided. The liquid crystal layer has different thicknesses in the reflection region 17 and the transmission region 16; for example, the liquid crystal layer in the transmission region 16 has a thickness twice than the thickness of the liquid crystal layer in the reflection region 17 so that the reflected ambient light (or environmental light) by the reflective electrode 171 of the reflection region 17 have the same phase difference as the light from the backlight and passing through the liquid crystal layer in the transmissive region 16. Besides, a λ/4 (quarter wave) sheet 13 and a polarizer sheet 11 are arranged sequentially on the color filter substrate 15, and a λ/4 sheet 14 and a polarizer sheet 12 are arranged sequentially on the TFT array substrate 14.

From Fig. 1, it can be seen that the double-cell-gap transflective liquid crystal display in a conventional technology, a step exists at the boundary of the liquid crystal layers of two different thicknesses, the alignment of the liquid crystal molecules adjacent to this boundary region becomes abnormal due to such influence, and thus the display effect is disadvantageously influenced to make the characteristics such as contrast ratio, etc. degraded.

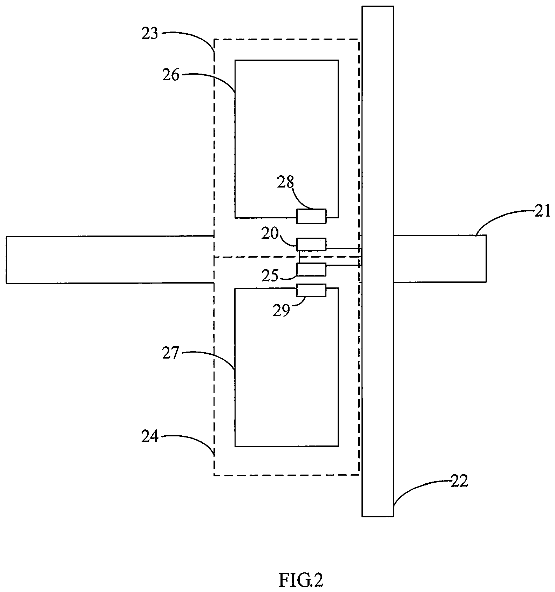

A comparative embodiment of this disclosed technology makes modification on pixel structure of the transflective liquid crystal display. With reference to Fig. 2, the transflective array substrate provided by the embodiment comprises a plurality of the pixel units, which are defined by gate lines and data lines that are crossed with each other, each pixel unit comprises:
a gate line 21 which is opaque and provided on a base substrate (not shown);
a thin film transistor (not shown) provided on the gate line 21, the gate electrode of the thin film transistor and the gate line 21 being electrically connected; and
a reflective electrode 27 and a transmissive electrode 26 provided on the base substrate, the reflective electrode 27 and the transmissive electrode 26 being electrically insulated from each other.

The gate line 21 is provided between the reflective electrode 27 and the transmissive electrode 26, and under the reflective electrode 27 and the transmissive electrode 26 for shielding light to prevent the light from being emitted from the base substrate to between the reflective electrode 27 and the transmissive electrode 26.

In the embodiment, the gate line 21 can be formed by the opaque metal material, such as aluminum, molybdenum and the like. The base substrate may be a transparent substrate such as a glass substrate or a plastic substrate.

With above pixel structure, the back light generated by a backlight source under the base substrate passes through the substrate and reaches the gate line 21, and is blocked by the gate line 21, such that the light can not be incident to between the reflective electrode 27 and the transmissive electrode 26, and further can not be incident to the liquid crystal layer at the boundary between the reflection region 24 and the transmission region 23. Therefore the liquid crystal layer at the boundary essentially does not participate in display, and the abnormal display at the boundary can be reduced or eliminated, and thus the display quality is improved.

In this comparative embodiment, each pixel unit can comprise two TFTs, which respectively control the applied voltages of the transmission region 24 and the reflection region 23. In this embodiment, the drain electrode 29 of one TFT is electrically connected with the reflective electrode 27, the source electrode 25 of this TFT is electrically connected with the data line 22 provided on the base substrate; the drain electrode 28 of the other TFT is electrically connected with the transmissive electrode 26, and the source electrode 20 of this TFT is electrically connected with the data line 22. The above two TFTs can have the substantially same size and function.

In an embodiment according to the claimed invention, each pixel unit can simultaneously control the applied voltages of the transmission region and the reflection region through same one thin film transistor. In this embodiment, the source electrode of the thin film transistor is electrically connected with the date line 22 on the base substrate, and the drain electrode of the thin film transistor is electrically connected with the transmission region 26 and the reflective electrode 27 respectively.

In the conventional transflective pixel structure, a gate line passes through one side of the pixel region; however, in this embodiment, the gate line passes through within the pixel structure and divides the pixel region into two regions, of which an upper half portion is a transmission region, and a lower half portion is a reflection region in the drawing. The two regions on the gate line can each have a thin film transistor of the same size, which respectively controls the applied voltage of each region. The metal layer of the gate line is opaque to block the light transmitted from the substrate to prevent it from being incident to the boundary of the liquid crystal layers of different thickness to reduce or eliminate abnormal light here to enhance the display quality. Meanwhile, the gate line is moved upwardly, and no new shielding layer is incorporated in the pixel structure, and thus the aperture ratio of the pixel unit is not disadvantageously influenced.

Based on the above transflective pixel structure, another embodiment of the disclosed technology provides a transflective liquid crystal display, which comprises: a color filter substrate;
a TFT array substrate attached to the color filter substrate to form a liquid cell;
a liquid crystal layer interposed between the color filter substrate and the TFT array substrate; and
a plurality of pixel units formed on the TFT array substrate, each pixel unit comprising a transmission region and a reflection region, the liquid crystal layer in the transmission region and that of the reflection region having different thicknesses.

Each pixel unit comprises: a reflective electrode and a transmissive electrode provided on the TFT array substrate;
an opaque gate line for shielding light transmitted from the TFT array substrate to a boundary between the transmission region and the reflection region, the gate line located between the reflective electrode and the transmissive electrode and under the reflective electrode and the transmissive electrode; and
a thin film transistor, a gate electrode of which is electrically connected with the gate line.

In this embodiment, the thickness of the liquid crystal layer in the transmission region is twice of the thickness of the liquid crystal layer in the reflection region. It should be understood that the proportion relationship between the thickness of the liquid crystal layer in the transmission region and that of the liquid crystal layer in the reflection region may not be twice strictly.

The gate line is formed by an opaque metal material, such as aluminum, molybdenum, or the like.

In a comparative embodiment, in the transflective liquid crystal display, each pixel unit comprises two thin film transistors; the drain electrode of one thin film transistor (TFT) is electrically connected with the reflective electrode, the source electrode of this TFT is electrically connected with the data line provided on the TFT array substrate; the drain electrode of the other thin film transistor is electrically connected with the transmissive electrode, and the source electrode of the other TFT is electrically connected with the data line.

In an embodiment according to the claimed invention, in the transflective liquid crystal display, each pixel unit comprises one thin film transistor only, the source electrode of which is electrically connected with the data line provided on the TFT array substrate, and the drain electrode is electrically connected with the transmissive electrode and the reflective electrode respectively.

From the above, it can be seen that, different from the conventional structure, the embodiments of the disclosed technology modify the position of the gate line in each pixel unit on the TFT array substrate of the transflective liquid crystal display, and form the gate line under the boundary between the reflection region and the transmission region; the gate line shields the light incident to the boundary from the TFT array substrate so as to reduce or eliminate light leakage at the boundary between the transmission region and the reflection region from the TFT array substrate, and thus the display quality of the liquid crystal can be improved.

## Claims

1. A transflective array substrate, comprising a base substrate and a plurality of pixel units, wherein each of the plurality of pixel units comprises:
a reflection region (17) comprising a reflective electrode (27) and a transmission region (16) comprising a transmissive electrode (26), the reflective electrode (27) and the transmissive electrode (26) being provided on the base substrate;
an opaque gate line (21) provided on the base substrate; and
a thin film transistor provided on the base substrate, a gate electrode of the thin film transistor being electrically connected to the gate line (21),
wherein:
the gate line (21) is located between the reflective electrode (27) and the transmissive electrode (26) and under the reflective electrode (27) and the transmissive electrode (26), for shielding light transmitted from the base substrate to a boundary between the reflection region (17) and the transmission region (17);
the thin film transistor is provided on the gate line (21);
each pixel unit further comprises a data line (22), and a source electrode (20, 25) of the thin film transistor is electrically connected with the data line (22), and
a drain electrode (28, 29) of the thin film transistor is electrically connected with both the transmissive electrode (26) and the reflective electrode (27).

2. The transflective array substrate according to claim 1, **characterized in that** the gate line (21) is an opaque metal gate line.

3. A transflective liquid crystal display, comprising:
a color filter substrate (15) and the transflective array substrate of claim 1, wherein: the transflective array substrate (14) is attached to the color filter substrate (15) to form a liquid crystal cell;
a liquid crystal layer is interposed between the color filter substrate (15) and the transflective array substrate (14); and
the liquid crystal layer in the transmission region (16) has a different thickness from that in the reflection region (17).

4. The transflective liquid crystal display according to claim 3, **characterized in that** the gate line (21) is an opaque metal gate line.

5. The transflective liquid crystal display according to claim 3 or 4, **characterized in that** the liquid crystal layer in the transmission region (161) has a thickness twice of that in the reflection region (171).

## Patentansprüche

1. Transflektives Array-Substrat mit einem Basissubstrat und einer Vielzahl von Pixeleinheiten, wobei jede der Vielzahl von Pixeleinheiten aufweist:
eine Reflexionsregion (17) mit einer reflektiven Elektrode (27) und eine Transmissionsregion (16) mit einer transmissiven Elektrode (26), wobei die reflektive Elektrode (27) und die transmissive Elektrode (26) auf dem Basissubstrat vorgesehen sind;
eine opake Gate-Leitung (21), die auf dem Basissubstrat vorgesehen ist; und
einen Dünnschichttransistor, der auf dem Basissubstrat vorgesehen ist, wobei eine Gate-Elektrode des Dünnschichttransistors elektrisch mit der Gate-Leitung (21) verbunden ist,
wobei:
die Gate-Leitung (21) sich zwischen der reflektiven Elektrode (27) und der transmissiven Elektrode (26) und unter der reflektiven Elektrode (27) und der transmissiven Elektrode (26) zum Abschirmen von Licht, das von dem Basissubstrat zu einer Grenze zwischen der Reflexionsregion (17) und der Transmissionsregion (17) übertragen wurde, befindet;
der Dünnschichttransistor auf der Gate-Leitung (21) vorgesehen ist;
jede Pixeleinheit weiter eine Daten-Leitung (22) aufweist, und wobei eine Source-Elektrode (20, 25) des Dünnschichttransistors elektrisch mit der Daten-Leitung (22) verbunden ist, und
eine Drain-Elektrode (28, 29) des Dünnschichttransistors elektrisch mit sowohl der transmissiven Elektrode (26) als auch der reflektiven Elektrode (27) verbunden ist.

2. Transflektives Array-Substrat gemäß Anspruch 1, **dadurch gekennzeichnet, dass** die Gate-Leitung (21) eine opake Metall-Gate-Leitung ist.

3. Transflektive Flüssigkristallanzeige mit:
einem Farbfiltersubstrat (15) und dem transflektiven Array-Substrat gemäß Anspruch 1, wobei:
das transflektive Array-Substrat (14) an das Farbfiltersubstrat (15) angefügt ist, um eine Flüssigkristallzelle zu bilden;
eine Flüssigkristallschicht zwischen dem Farbfiltersubstrat (15) und dem transflektiven Array-Substrat (14) zwischengeordnet ist; und
die Flüssigkristallschicht in der Transmissionsregion (16) eine unterschiedliche Dicke zu der in der Reflexionsregion (17) aufweist.

4. Transflektive Flüssigkristallanzeige gemäß Anspruch 3, **dadurch gekennzeichnet, dass** die Gate-Leitung (21) eine opake Metall-Gate-Leitung ist.

5. Transflektive Flüssigkristallanzeige gemäß Anspruch 3 oder 4, **dadurch gekennzeichnet, dass** die Flüssigkristallschicht in der Transmissionsregion (161) eine zweifache Dicke von der in der Reflexionsregion (171) aufweist.

## Revendications

1. Substrat de réseau transflectif, comprenant un substrat de base et une pluralité d'unités de pixel, dans lequel chacune de la pluralité d'unités de pixel comprend :
une région de réflexion (17) qui comprend une électrode réflective (27) et une région de transmission (16) qui comprend une électrode transmissive (26), l'électrode réflective (27) et l'électrode transmissive (26) étant prévues sur le substrat de base ;
une ligne de grille opaque (21) qui est prévue sur le substrat de base ; et
un transistor à film mince qui est prévu sur le substrat de base, une électrode de grille du transistor à film mince étant connectée électriquement à la ligne de grille (21) ; dans lequel :
la ligne de grille (21) est localisée entre l'électrode réflective (27) et l'électrode transmissive (26) et au-dessous de l'électrode réflective (27) et de l'électrode transmissive (26), pour assurer une protection vis-à-vis de la lumière qui est transmise depuis le substrat de base jusqu'à une frontière entre la région de réflexion (17) et la région de transmission (16) ;
le transistor à film mince est prévu sur la ligne de grille (21) ;
chaque unité de pixel comprend en outre une ligne de données (22), et une électrode de source (20, 25) du transistor à film mince est connectée électriquement à la ligne de données (22) ; et
une électrode de drain (28, 29) du transistor à film mince est connectée électriquement à la fois à l'électrode transmissive (26) et à l'électrode réflective (27).

2. Substrat de réseau transflectif selon la revendication 1, **caractérisé en ce que** la ligne de grille (21) est une ligne de grille en métal opaque.

3. Affichage à cristaux liquides transflectif, comprenant :
un substrat de filtre couleur (15) et le substrat de réseau transflectif selon la revendication 1 ; dans lequel :
le substrat de réseau transflectif (14) est fixé au substrat de filtre couleur (15) de manière à ce qu'ils forment une cellule de cristaux liquides ;
une couche de cristaux liquides est interposée entre le substrat de filtre couleur (15) et le substrat de réseau transflectif (14) ; et
la couche de cristaux liquides dans la région de transmission (16) présente une épaisseur différente de celle dans la région de réflexion (17).

4. Affichage à cristaux liquides transflectif selon la revendication 3, **caractérisé en ce que** la ligne de grille (21) est une ligne de grille en métal opaque.

5. Affichage à cristaux liquides transflectif selon la revendication 3 ou 4, **caractérisé en ce que** la couche de cristaux liquides dans la région de transmission (161) présente une épaisseur qui est le double de celle dans la région de réflexion (171).
